# FASCICULE DE BREVET EUROPEEN

(11) **EP 2 883 764 B1**
(45) Date de publication et mention de la délivrance du brevet: **05.02.2020**
(21) Numéro de dépôt: 14197848.6
(22) Date de dépôt: 15.12.2014
(51) Int. Cl.: B60S 1/38

(54) **Balai d'essuie-glace pour un système d'essuyage d'une vitre de véhicule et son procédé d'assemblage**
Scheibenwischerblatt für ein Reinigungssystem einer Fahrzeugscheibe und Verfahren zur Montage desselben
Windscreen-wiper blade for a windscreen-wiper system of a vehicle and assembling method thereof

(30) Priorité: 16.12.2013 FR 1362733
(43) Date de publication de la demande: 17.06.2015
(73) Titulaire: Valeo Systèmes d'Essuyage, 78322 Le Mesnil Saint Denis (FR)
(72) Inventeur: Gaucher, Vincent, 63720 ENNEZAT (FR)
(74) Mandataire: Callu-Danseux, Violaine

(56) Documents cités:
- EP-A1- 2 415 645
- WO-A1-2006/088274
- DE-A1-102011 078 185
- US-A1- 2011 016 653

## Description

### DOMAINE TECHNIQUE

La présente invention concerne un balai d'essuie-glace pour un système d'essuyage d'une vitre de véhicule, en particulier automobile, un système d'essuyage d'une vitre de véhicule, ainsi qu'un procédé d'assemblage d'un balai d'essuie-glace de véhicule.

### ETAT DE L'ART

Typiquement, un balai d'essuie-glace pour un système d'essuyage d'une vitre de véhicule automobile comprend un corps longitudinal portant une lame d'essuyage, en général en caoutchouc, destinée à frotter contre le pare-brise du véhicule pour évacuer de l'eau en l'amenant en dehors du champ de vision du conducteur. Le balai comporte en outre au moins un élément de support allongé élastique en forme de bande, aussi appelé vertèbre de rigidification, qui confère éventuellement un cintrage à la lame d'essuyage, de manière à favoriser l'application de cette lame sur le pare-brise.

Certains balais d'essuie-glace sont équipés d'un organe de maintien de la lame auquel est fixé un corps porteur d'un déflecteur aérodynamique destiné à améliorer les performances aérodynamiques du balai et assurer son plaquage sur le pare brise. L'organe de maintien comprend alors en général un premier logement de réception d'un talon de la lame et un second logement de réception de la vertèbre de rigidification. Le corps comprend des moyens de fixation à l'organe de maintien et ledit déflecteur aérodynamique. De tels balais sont par exemple décrits dans les demandes EP 2 415 645A1, DE 10 2011 078185A1 et US 2011/016653A1.

La présente invention propose une nouvelle technologie de balai, qui est simple, efficace et économique.

### EXPOSE DE L'INVENTION

L'invention propose à cet effet un balai d'essuie-glace pour un système d'essuyage d'une vitre de véhicule, en particulier automobile, comprenant :
- une lame d'essuyage,
- un élément de support allongé élastique en forme de bande,
- un organe longitudinal de maintien de la lame, et
- un corps longitudinal qui comprend un déflecteur aérodynamique et des moyens de fixation à l'organe de maintien,
dans lequel le corps longitudinal comprend une cavité interne de réception dudit élément de support.Selon l'invention, ledit élément de support n'est pas monté dans un logement de l'organe de maintien mais directement dans une cavité du corps longitudinal. Ceci permet de modifier le procédé d'assemblage du balai, comme cela sera décrit dans ce qui suit.

Le balai d'essuie-glace peut ainsi comprendre :
- un premier module comportant l'organe de maintien portant la lame d'essuyage,
   assemblé à
- un second module comportant le corps longitudinal qui comprend le déflecteur aérodynamique et les moyens de fixation à l'organe de maintien, et la cavité interne et l'élément de support allongé.

La cavité du corps longitudinal peut être configurée pour recevoir par coulissement longitudinal ledit élément de support. Elle peut avoir en section une forme sensiblement rectangulaire. Elle peut avoir des dimensions sensiblement égales à celles dudit élément de support, aux jeux de montage prêts. Elle peut présenter une largeur et/ou une hauteur sensiblement égale à la largeur, respectivement à l'épaisseur dudit élément de support en forme de bande, aux jeux de montage prêts. Ces jeux sont par exemple inférieurs à 1 mm, voire inférieurs à 0,5 mm.

Le corps longitudinal peut comprendre une partie définissant ladite cavité. Cette partie est de préférence une partie inférieure du corps longitudinal. Cette partie peut ainsi s'étendre en dessous du déflecteur du corps, qui forme en général la partie supérieure du corps longitudinal.

L'organe longitudinal de maintien peut comprendre un logement, dit premier logement, de réception d'un talon de la lame.

L'organe de maintien peut comprendre en outre un logement, dit second logement, de réception de ladite partie du corps longitudinal. Ainsi, au contraire de la technique antérieure où un second logement de l'organe de maintien est utilisé pour recevoir directement ledit élément de support, le second logement de l'organe est ici utilisé pour recevoir une partie du corps longitudinal et en particulier la partie du corps définissant la cavité de réception dudit élément de support.

Le second logement de l'organe de maintien peut être configuré pour recevoir par coulissement longitudinal ladite partie du corps longitudinal. Il peut avoir des dimensions sensiblement égales à celles de ladite partie du corps longitudinal, aux jeux de montage prêts. Ces jeux sont par exemple inférieurs à 1 mm, voire inférieurs à 0,5 mm.

Les moyens de fixation du corps longitudinal à l'organe de maintien peuvent être situés au dessus de sa partie définissant ladite cavité.

Les moyens de fixation du corps longitudinal peuvent comprendre des rainures longitudinales latérales et/ou des rebords longitudinaux latéraux. Ces rainures et/ou rebords peuvent être sensiblement parallèles entre eux et perpendiculaires à un plan longitudinal médian du balai.

Ledit élément de support peut s'étendre au-dessus du talon de la lame.

Le balai selon l'invention peut comprendre :
- au moins un élément longitudinal de chauffage, et/ou
- au moins un conduit interne de circulation de fluide, tel qu'un liquide lave glace ; ledit au moins un conduit est de préférence formé dans l'organe de maintien.

La présente invention concerne encore un système d'essuyage d'une vitre de véhicule, en particulier automobile, comportant au moins un balai selon l'une quelconque des définitions ci-dessus.

La présente invention concerne encore un procédé d'assemblage d'un balai d'essuie-glace pour un système d'essuyage d'une vitre de véhicule, en particulier automobile, ce balai comprenant :
- une lame d'essuyage,
- un élément de support allongé élastique en forme de bande,
- un organe longitudinal de maintien de ladite lame qui comprend un logement, dit premier logement, de réception d'un talon de ladite lame, et
- un corps longitudinal qui comprend un déflecteur aérodynamique et des moyens de fixation à l'organe de maintien,
caractérisé en ce qu'il comprend les étapes consistant à :
a) insérer le talon de la lame dans le premier logement de l'organe de maintien,
b) insérer ledit élément de support dans une cavité d'une partie du corps longitudinal pour former un module indépendant de l'organe de maintien, et
c) insérer ladite partie du corps longitudinal définissant ladite cavité interne dans un second logement de l'organe de maintien.

L'étape a) peut être réalisée avant l'étape c) et permettre de former un premier module comportant l'organe de maintien portant la lame dont le talon est inséré dans le premier logement de l'organe de maintien. Indépendamment de l'étape a), l'étape b) peut ainsi permettre de former un second module indépendant de l'organe de maintien.

La technologie particulière du balai selon l'invention autorise l'assemblage de deux modules pré-assemblés indépendamment l'un de l'autre, le premier module comportant l'organe de maintien portant la lame (dont le talon est inséré dans le premier logement de l'organe de maintien - étape a)), et le second module comportant le corps longitudinal portant l'élément de support allongé élastique en forme de bande (ce dernier étant inséré dans la cavité du corps longitudinal - étape c). Pour achever l'assemblage du balai, il suffit d'assembler ces deux modules et plus précisément d'insérer la partie du corps longitudinal définissant la cavité dans le second logement de l'organe (étape c).

Dans une variante de mise en œuvre, l'étape c) est réalisée avant l'étape a).

Dans une variante encore, l'étape b) est réalisée après l'étape c).

### DESCRIPTION DES FIGURES

L'invention sera mieux comprise et d'autres détails, caractéristiques et avantages de l'invention apparaîtront à la lecture de la description suivante faite à titre d'exemple non limitatif en référence aux dessins annexés, dans lesquels :
- la figure 1 est une vue en perspective éclatée d'un système d'essuyage selon l'art antérieur,
- la figure 2 est une vue schématique en coupe d'un balai d'essuie-glace selon l'invention,
- la figure 3 est une vue schématique en coupe et en perspective du balai de la figure 2, et
- la figure 4 est une vue schématique en coupe d'une variante de réalisation du balai d'essuie-glace selon l'invention.

### DESCRIPTION DETAILLEE

Il faut noter que les figures exposent l'invention de manière détaillée pour mettre en œuvre l'invention, lesdites figures pouvant bien entendu servir à mieux définir l'invention le cas échéant.

Dans la description qui suit, les dénominations longitudinales ou latérales se réfèrent à l'orientation du balai d'essuie-glace selon l'invention. La direction longitudinale correspond à l'axe principal du balai dans lequel il s'étend, alors que les orientations latérales (respectivement avant et arrière) correspondent à des droites concourantes, c'est-à-dire qui croisent la direction longitudinale, notamment perpendiculaires à l'axe longitudinal du balai dans son plan de rotation. Pour les directions longitudinales, les dénominations extérieure ou intérieure s'apprécient par rapport au point de fixation du balai sur le bras porte-balai, la dénomination intérieure correspondant à la partie où le bras et un demi-balai s'étendent. Enfin, les directions référencées comme supérieures ou inférieures correspondent à des orientations perpendiculaires au plan de rotation du balai d'essuie-glace, la dénomination inférieure contenant le plan du pare-brise.

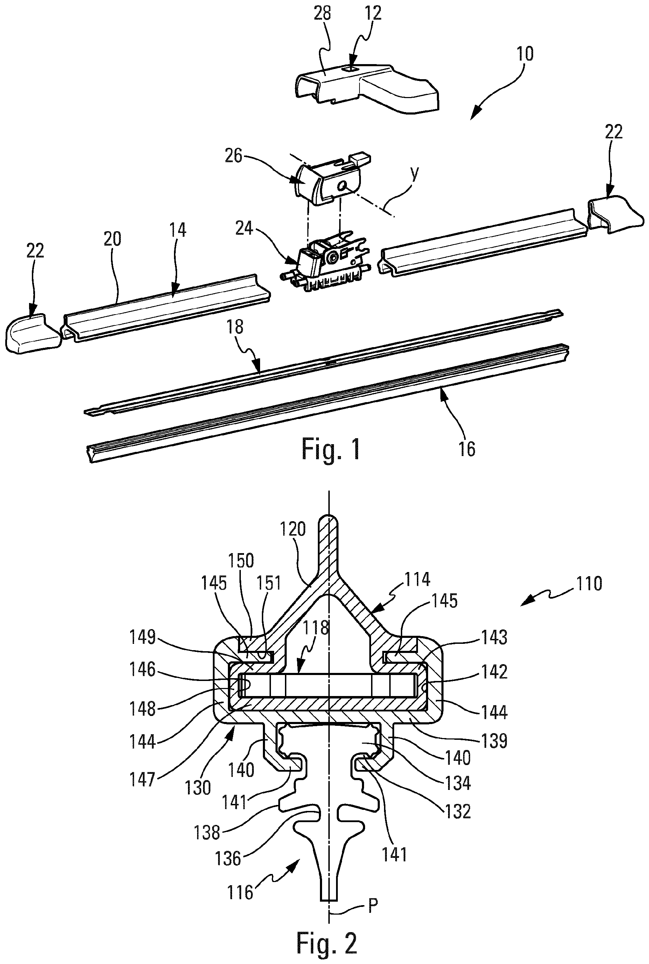

Il est illustré à la figure 1 un système selon l'art antérieur d'essuie-glace de pare-brise d'un véhicule, en particulier automobile. Ce système comprend un balai 10 d'essuyage du pare-brise et un bras 12 porte-balai qui est partiellement représenté et destiné à être entraîné par un moteur pour suivre un mouvement angulaire de va-et-vient permettant d'évacuer l'eau et éventuellement d'autres éléments indésirables recouvrant le pare-brise.

Le balai 10 comprend ici un corps longitudinal 14, une lame d'essuyage 16, en général en caoutchouc, et au moins un élément de support 18 de manière à favoriser l'application de la lame 16 sur la vitre du véhicule.

Le corps longitudinal 14 du balai 10 comporte un aileron supérieur 20 destiné à améliorer le fonctionnement du système d'essuyage, le but de cet aileron 20 étant d'améliorer le plaquage du balai sur le pare-brise et donc la performance aérodynamique du système.

Le balai 10 comprend en outre des embouts ou agrafes d'accrochage 22 de la lame 16 et de l'élément de support 18 sur le corps longitudinal 14, ces agrafes 22 étant situées à chacune des extrémités longitudinales du corps 14.

Le corps longitudinal 14 du balai est ici réalisé en deux parties indépendantes qui sont disposées sensiblement bout à bout et raccordées l'une à l'autre par un connecteur 24 intermédiaire. Ce connecteur 24 est donc intercalé entre les deux parties du corps longitudinal 14 et comprend des moyens de fixation à ces parties, tels que des canules.

Pour assurer son montage sur le bras 12, le balai 10 comprend un adaptateur 26 monté sur le connecteur 24 qui permet une articulation du balai 10 par rapport au bras 12. L'articulation du balai 10 par rapport au bras 12 est une articulation selon un mouvement de rotation autour d'un axe de rotation Y perpendiculaire à l'axe longitudinal du balai 10. Le balai 10 doit en effet présenter au moins un degré de liberté en rotation par rapport au bras 12, et plus spécifiquement par rapport à une pièce terminale 28 du bras 12, pour permettre au balai 10 de suivre la courbure du pare-brise.

L'invention concerne un type particulier de balai d'essuie-glace selon lequel le balai comprend un organe longitudinal de maintien de la lame qui porte la lame et sur lequel est fixé le corps longitudinal du balai.

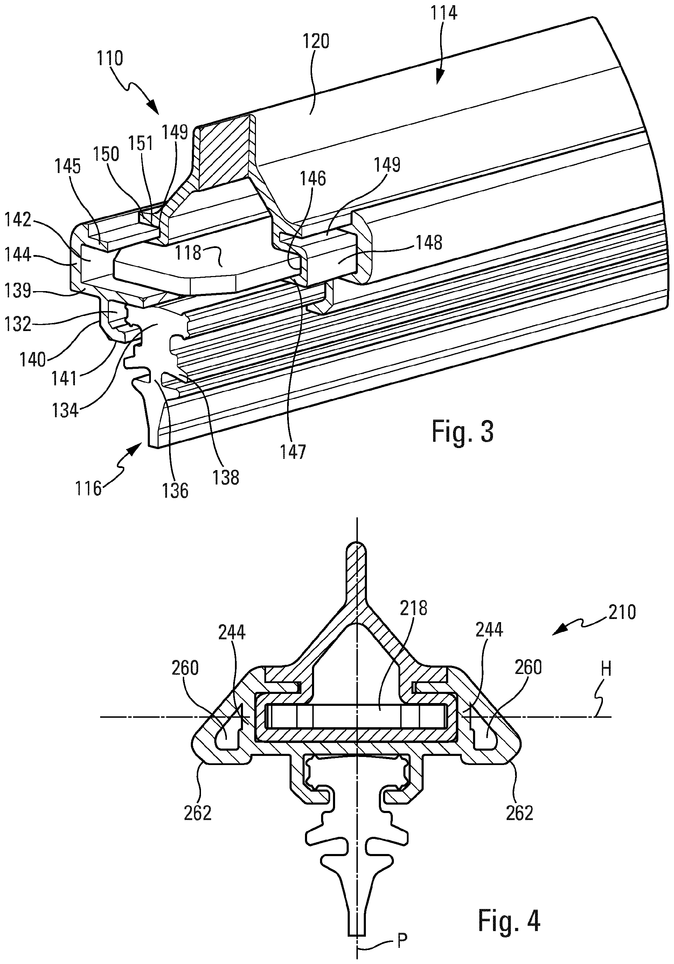

Les figures 2 et 3 représentent un balai d'essuie-glace 110 de ce type selon l'invention, les éléments déjà décrits dans ce qui précède étant désignés dans ce qui suit par les mêmes chiffres de référence augmentés d'une centaine. Ainsi, les références 114, 116, 118, 120 désignent respectivement le corps longitudinal, la lame, l'élément de support et le déflecteur du balai 110.

L'organe de maintien 130 du balai 110 comprend un logement, dit premier logement ou logement inférieur 132 de réception d'un talon longitudinal 134 de la lame 116. La lame 116 est par exemple du type sapin, bien connu de l'homme du métier. Son extrémité supérieure est reliée par une charnière 136 et un organe d'amortissement 138 au talon 134. De façon connue, en fonctionnement, la lame 116 peut venir en butée sur l'organe 138 qui amortit son retournement vers l'avant ou vers l'arrière.

Le logement 132 est configuré pour recevoir par coulissement longitudinal le talon 134 de la lame 116. Ce logement 132 est délimité par une paroi 139 sensiblement horizontale (ici supérieure) et deux parois latérales 140 sensiblement verticales qui s'étendent vers le bas depuis la paroi 139 et dont les extrémités inférieures sont chacune reliées à un rebord longitudinal 141. Les rebords 141 sont sensiblement coplanaires et s'étendent l'un vers l'autre. Ils sont sensiblement perpendiculaires à un plan médian P du balai qui est un plan longitudinal sensiblement vertical, passant sensiblement par le milieu du balai. Les rebords 141 délimitent entre eux une fente dans laquelle peut coulisser et est montée une partie inférieure amincie du talon 134 qui a ici une section sensiblement en forme de T.

L'organe de maintien 130 comprend un logement, dit second logement ou logement supérieur 142 de réception d'une partie inférieure 143 du corps longitudinal 114.

Le logement 142 est configuré pour recevoir par coulissement longitudinal cette partie 143 du corps longitudinal 114. Ce logement 142 est délimité par la paroi 139 (ici inférieure) et deux parois latérales 144 sensiblement verticales qui s'étendent vers le haut depuis la paroi 139 et dont les extrémités supérieures sont chacune reliées à un rebord longitudinal 145. Ces rebords 145 sont sensiblement coplanaires et s'étendent l'un vers l'autre.

Le corps longitudinal 114 du balai comprend une partie supérieure définissant le déflecteur 120 et la partie inférieure 143 précitée qui est montée dans le logement 142 de l'organe de maintien 130.

La partie inférieure 143 du corps longitudinal 114 a une forme générale parallélépipédique et comprend une cavité interne 146 de réception de l'élément de support 118. La cavité 146 a ici une forme en section sensiblement complémentaire de celle de l'élément de support 118.

Dans l'exemple représenté, la cavité 146 est délimitée par une paroi inférieure 147 sensiblement horizontale dont les bords longitudinaux latéraux sont reliés aux extrémités inférieures de deux parois longitudinales 148 sensiblement verticales. Les extrémités supérieures de ces parois 148 sont reliées à des rebords longitudinaux 149 qui sont sensiblement coplanaires et sensiblement perpendiculaires au plan P. Ces rebords 149 s'étendent l'un vers l'autre et définissent entre eux une fente qui effectue une communication entre la cavité 146 et le reste de l'espace interne du corps longitudinal 114.

La partie supérieure du corps longitudinal 114 comportant le déflecteur 120 comprend des rebords longitudinaux latéraux 150 qui sont sensiblement coplanaires et sensiblement perpendiculaires au plan P. Chaque rebord 150 s'étend dans une direction opposée à l'autre rebord. Le rebord 150 situé à l'avant du balai s'étend donc vers l'avant, et le rebord 150 situé à l'arrière du balai s'étend vers l'arrière.

Les rebords 150 s'étendent au-dessus et à distance des rebords 149, respectivement, et définissent avec ces derniers des rainures longitudinales latérales 151 de réception des rebords 145 de l'organe de maintien 130, pour la fixation du corps longitudinal 114 à l'organe de maintien 130.

La cavité 146 et les logements 132, 142 sont configurés pour autoriser un coulissement de l'élément de support 118, du talon 134 de la lame et de la partie 143 du corps longitudinal 114, respectivement. Pour autoriser ce coulissement, il est préférable que des jeux, en directions horizontale et verticale, existent entre l'élément de support 118 et les parois de la cavité, entre le talon 134 et les parois du logement 132 et entre la partie 143 du corps longitudinal 114 et le logement 142. Ces jeux ne sont toutefois pas trop importants pour que les pièces soient calées les unes par rapport aux autres en position de montage. Ces jeux sont donc de préférence inférieurs ou égaux à 1 mm, et plus préférentiellement inférieurs ou égaux à 0,5 mm.

Le balai 110 présente une symétrie par rapport au plan P.

Le balai 110 peut être monté de la façon suivante. Le talon 134 de la lame 116 est monté par coulissement longitudinal dans le logement 132 de l'organe de maintien 130 de façon à former un premier module pré-assemblé. L'élément de support 118 est monté par coulissement longitudinal dans la cavité 146 du corps longitudinal 114 de façon à former un second module pré-assemblé. Ces modules sont ensuite assemblés ensemble. Cette opération d'assemblage peut être réalisée de deux façons. Il est par exemple possible de positionner les modules bout à bout et de les faire coulisser l'un dans l'autre de façon à ce que la partie 143 du corps longitudinal 114 coulisse dans le logement 142 de l'organe 130. Il est également possible de positionner l'un des crochets 145 de l'organe à l'entrée de la rainure 151 correspondante du corps longitudinal 114, puis à rabattre le corps longitudinal 114 dans le logement 142 de l'organe jusqu'à ce que la partie 143 du corps longitudinal 114 s'engage en force dans le logement 142, ce qui provoque une déformation élastique de l'organe de maintien 130. On comprend également que cette fixation est ici réversible puisqu'il suffit de répéter ces opérations en sens inverse pour démonter le corps longitudinal 114 de l'organe de maintien 130.

La figure 4 représente une variante de réalisation du balai 210 selon l'invention, qui diffère du balai 110 décrit dans ce qui précède essentiellement en ce qu'il comprend en outre des conduits 260 de circulation de fluide, tel que du liquide lave glace. Le balai 210 comprend donc toutes les caractéristiques du balai 110 décrit en référence aux figures 2 et 3.

Les conduits 260, ici au nombre de deux, sont situés sur les deux côtés latéraux du balai 210, respectivement, et sont coupés par un même plan H perpendiculaire au plan P et parallèle à l'élément de support 218. Chaque conduit 260 est ici délimité par une paroi 244 (correspondant à la paroi 144 de l'organe 130 des figures 2 et 3) de l'organe de maintien 130 et par une paroi longitudinale 262 à section incurvée sensiblement en C. Les extrémités inférieure et supérieure de la paroi 244 sont respectivement reliées aux bords longitudinaux inférieur et supérieur de la paroi 262 dont l'ouverture du C est sensiblement orientée vers l'élément de support 218.

## Revendications

1. Balai d'essuie-glace (110) pour un système d'essuyage d'une vitre de véhicule, en particulier automobile, comprenant :
- une lame d'essuyage (116),
- un élément de support allongé élastique en forme de bande (118),
- un organe longitudinal (130) de maintien de ladite lame (116) et
- un corps longitudinal (114) qui comprend un déflecteur aérodynamique (120), des moyens de fixation à l'organe de maintien (130) et une cavité interne (146) de réception dudit élément de support allongé,
ledit balai d'essuie-glace étant **caractérisé en ce qu'**il comprend:
- un premier module comportant l'organe de maintien portant la lame d'essuyage (116),
assemblé à
- un second module comportant le corps longitudinal (114) et l'élément de support allongé (118).

2. Balai (110) selon la revendication 1, dans lequel ladite cavité interne (146) est configurée pour recevoir par coulissement longitudinal ledit élément de support (118).

3. Balai (110) selon la revendication 1 ou 2, dans lequel ladite cavité interne (146) présente une largeur sensiblement égale à la largeur dudit élément de support (118), aux jeux de montage prêts.

4. Balai (110) selon l'une des revendications précédentes, dans lequel ladite cavité interne (146) présente une hauteur sensiblement égale à l'épaisseur de l'élément de support (118), aux jeux de montage prêts.

5. Balai (110) selon l'une des revendications précédentes, dans lequel ladite cavité interne (146) a des dimensions sensiblement égales à celles dudit élément de support (118), aux jeux de montage prêts.

6. Balai (110) selon l'une des revendications précédentes, dans lequel organe longitudinal (130) de maintien comprend un logement (132), dit premier logement, de réception d'un talon (134) de la lame (116).

7. Balai (110) selon l'une des revendications précédentes, dans lequel le corps longitudinal (114) comprend une partie (143) définissant ladite cavité (146).

8. Balai (110) selon la revendication 7, dans lequel ladite partie du corps longitudinal (114) est une partie inférieure (143) du corps longitudinal (114).

9. Balai (110) selon la revendication 8, dans lequel l'organe de maintien (130) comprend un logement (142), dit second logement, de réception de ladite partie (143) du corps longitudinal (114).

10. Balai (110) selon la revendication 9, dans lequel ledit second logement (142) est configuré pour recevoir par coulissement longitudinal ladite partie (143) du corps longitudinal (114).

11. Balai (110) selon l'une des revendications 7 à 10, dans lequel les moyens de fixation du corps (114) sont situés au dessus de ladite partie (143) du corps longitudinal (114).

12. Balai (110) selon l'une des revendications précédentes, dans lequel les moyens de fixation du corps comprennent des rainures longitudinales latérales (151) et/ou des rebords longitudinaux latéraux (150), ces rainures (151) et/ou rebords (150) étant sensiblement parallèles entre eux et perpendiculaires à un plan longitudinal médian (P) du balai.

13. Balai (110) selon l'une des revendications précédentes, dans lequel l'élément de support (118) s'étend au-dessus dudit talon (134).

14. Balai (110) selon l'une des revendications précédentes, **caractérisé en ce qu'**il comprend au moins un élément longitudinal de chauffage.

15. Balai (210) selon l'une des revendications précédentes, **caractérisé en ce qu'**il comprend au moins un conduit interne (260) de circulation de fluide, tel qu'un liquide lave glace.

16. Balai (210) selon la revendication 15, dans lequel ledit au moins un conduit (260) est formé dans l'organe de maintien (230).

17. Système d'essuyage d'une vitre de véhicule, en particulier automobile, comportant au moins un balai (110) selon l'une des revendications précédentes.

18. Procédé d'assemblage d'un balai d'essuie-glace (110) pour un système d'essuyage d'une vitre de véhicule, en particulier automobile, ce balai comprenant :
- une lame d'essuyage (116),
- un élément de support allongé élastique en forme de bande (118),
- un organe longitudinal (130) de maintien de ladite lame (116) qui comprend un logement (132), dit premier logement, de réception d'un talon (134) de ladite lame (116), et
- un corps longitudinal (114) qui comprend un déflecteur aérodynamique (120) et des moyens de fixation à l'organe de maintien (130),
**caractérisé en ce qu'**il comprend les étapes consistant à :
a) insérer le talon (134) de la lame (116) dans ledit premier logement (132) de l'organe de maintien (130),
b) insérer ledit élément de support (118) dans une cavité interne (146) d'une partie (143) du corps longitudinal (114) pour former un module (118, 114) indépendant de l'organe de maintien et
c) insérer ladite partie (143) du corps longitudinal (114) dans un second logement (142) de l'organe de maintien (130).

## Patentansprüche

1. Scheibenwischerblatt (110) für ein Reinigungssystem einer Scheibe eines Fahrzeugs, insbesondere eines Kraftfahrzeugs, das Folgendes beinhaltet:
- eine Reinigungsleiste (116),
- ein elastisches, gestrecktes Stützelement in der Form eines Streifens (118),
- ein längliches Organ (130) zum Halten der Leiste (116) und
- einen Längskörper (114), der einen aerodynamischen Deflektor (120), Mittel zum Befestigen an dem Halteorgan (130) und einen Innenhohlraum (146) zum Aufnehmen des gestreckten Stützelements beinhaltet,
wobei das Scheibenwischerblatt **dadurch gekennzeichnet** ist, das es Folgendes beinhaltet:
- ein erstes Modul, das das Halteorgan, das die Reinigungsleiste (116) trägt, umfasst,
angebaut an
- ein zweites Modul, das den Längskörper (114) und das gestreckte Stützelement (118) umfasst.

2. Blatt (110) nach Anspruch 1, wobei der Innenhohlraum (146) dazu konfiguriert ist, das Stützelement (118) durch Verschieben in Längsrichtung aufzunehmen.

3. Blatt (110) nach Anspruch 1 oder 2, wobei der Innenhohlraum (146) eine Breite aufweist, die bis auf das Montagespiel im Wesentlichen gleich der Breite des Stützelements (118) ist.

4. Blatt (110) nach einem der vorhergehenden Ansprüche, wobei der Innenhohlraum (146) eine Höhe aufweist, die bis auf das Montagespiel im Wesentlichen gleich der Stärke des Stützelements (118) ist.

5. Blatt (110) nach einem der vorhergehenden Ansprüche, wobei der Innenhohlraum (146) Maße aufweist, die bis auf das Montagespiel im Wesentlichen gleich denen des Stützelements (118) sind.

6. Blatt (110) nach einem der vorhergehenden Ansprüche, wobei das längliche Halteorgan (130) einen Sitz (132), der als erster Sitz bezeichnet wird, zum Aufnehmen eines Wulsts (134) der Leiste (116) beinhaltet.

7. Blatt (110) nach einem der vorhergehenden Ansprüche, wobei der Längskörper (114) einen Abschnitt (143) beinhaltet, der den Hohlraum (146) definiert.

8. Blatt (110) nach Anspruch 7, wobei der Abschnitt des Längskörpers (114) ein unterer Abschnitt (143) des Längskörpers (114) ist.

9. Blatt (110) nach Anspruch 8, wobei das Halteorgan (130) einen Sitz (142), der als zweiter Sitz bezeichnet wird, zum Aufnehmen des Abschnitts (143) des Längskörpers (114) beinhaltet.

10. Blatt (110) nach Anspruch 9, wobei der zweite Sitz (142) dazu konfiguriert ist, den Abschnitt (143) des Längskörpers (114) durch Verschieben in Längsrichtung aufzunehmen.

11. Blatt (110) nach einem der Ansprüche 7 bis 10, wobei sich die Mittel zum Befestigen des Körpers (114) oberhalb des Abschnitts (143) des Längskörpers (114) befinden.

12. Blatt (110) nach einem der vorhergehenden Ansprüche, wobei die Mittel zum Befestigen des Körpers seitliche Längsnuten (151) und/oder seitliche Längskanten (150) beinhalten, wobei diese Nuten (151) und/oder Kanten (150) im Wesentlichen untereinander parallel und senkrecht zu einer Längsmittelebene (P) des Blatts sind.

13. Blatt (110) nach einem der vorhergehenden Ansprüche, wobei sich das Stützelement (118) oberhalb des Wulsts (134) erstreckt.

14. Blatt (110) nach einem der vorhergehenden Ansprüche, **dadurch gekennzeichnet, dass** es mindestens ein längliches Heizelement beinhaltet.

15. Blatt (210) nach einem der vorhergehenden Ansprüche, **dadurch gekennzeichnet, dass** es mindestens eine interne Leitung (260) zur Zirkulation eines Fluids, wie etwa einer Scheibenwaschflüssigkeit, beinhaltet.

16. Blatt (210) nach Anspruch 15, wobei die mindestens eine Leitung (260) in dem Halteorgan (230) gebildet ist.

17. Reinigungssystem einer Scheibe eines Fahrzeugs, insbesondere eines Kraftfahrzeugs, das mindestens ein Blatt (110) nach einem der vorhergehenden Ansprüche umfasst.

18. Verfahren zur Montage eines Scheibenwischerblatts (110) für ein Reinigungssystem einer Scheibe eines Fahrzeugs, insbesondere eines Kraftfahrzeugs, wobei dieses Blatt Folgendes beinhaltet:
- eine Reinigungsleiste (116),
- ein elastisches, gestrecktes Stützelement in der Form eines Streifens (118),
- ein längliches Organ (130) zum Halten der Leiste (116), das einen Sitz (132), der als erster Sitz bezeichnet wird, zum Aufnehmen eines Wulsts (134) der Leiste (116) beinhaltet, und
- einen Längskörper (114), der einen aerodynamischen Deflektor (120) und Mittel zum Befestigen an dem Halteorgan (130) beinhaltet,
**dadurch gekennzeichnet, dass** es die Schritte beinhaltet, die aus Folgendem bestehen:
a) Einführen des Wulsts (134) der Leiste (116) in den ersten Sitz (132) des Halteorgans (130),
b) Einführen des Stützelements (118) in einen Innenhohlraum (146) eines Abschnitts (143) des Längskörpers (114), um ein von dem Halteorgan unabhängiges Modul (118, 114) zu bilden, und
a) Einführen des Abschnitts (143) des Längskörpers (114) in einen zweiten Sitz (142) des Halteorgans (130).

## Claims

1. Windscreen wiper blade (110) for a system for wiping a vehicle window, in particular a motor vehicle window, comprising:
- a blade rubber (116),
- an elastic elongate support element in the form of a strip (118),
- a longitudinal member (130) for holding said blade rubber (116), and
- a longitudinal body (114) that comprises an aerodynamic deflector (120), means for fastening to the holding member (130) and an internal cavity (146) for receiving said elongate support element,
said windscreen wiper blade being **characterized in that** it comprises:
- a first module having the holding member bearing the blade rubber (116), fitted to
- a second module having the longitudinal body (114) and the elongate support element (118).

2. Blade (110) according to Claim 1, wherein said internal cavity (146) is configured to receive said support element (118) by longitudinal sliding.

3. Blade (110) according to Claim 1 or 2, wherein said internal cavity (146) has a width substantially equal to the width of said support element (118), give or take assembly clearances.

4. Blade (110) according to one of the preceding claims, wherein said internal cavity (146) has a height substantially equal to the thickness of the support element (118), give or take assembly clearances.

5. Blade (110) according to one of the preceding claims, wherein said internal cavity (146) has dimensions substantially equal to those of said support element (118), give or take assembly clearances.

6. Blade (110) according to one of the preceding claims, wherein the longitudinal holding member (130) comprises a housing (132), referred to as first housing, for receiving a heel (134) of the blade rubber (116).

7. Blade (110) according to one of the preceding claims, wherein the longitudinal body (114) comprises a part (143) that defines said cavity (146).

8. Blade (110) according to Claim 7, wherein said part of the longitudinal body (114) is a lower part (143) of the longitudinal body (114).

9. Blade (110) according to Claim 8, wherein the holding member (130) comprises a housing (142), referred to as second housing, for receiving said part (143) of the longitudinal body (114).

10. Blade (110) according to Claim 9, wherein said second housing (142) is configured to receive said part (143) of the longitudinal body (114) by longitudinal sliding.

11. Blade (110) according to one of Claims 7 to 10, wherein the means for fastening the body (114) are situated above said part (143) of the longitudinal body (114) .

12. Blade (110) according to one of the preceding claims, wherein the means for fastening the body comprise lateral longitudinal grooves (151) and/or lateral longitudinal lips (150), these grooves (151) and/or lips (150) being substantially parallel to one another and perpendicular to a longitudinal mid-plane (P) of the blade.

13. Blade (110) according to one of the preceding claims, wherein the support element (118) extends above said heel (134).

14. Blade (110) according to one of the preceding claims, **characterized in that** it comprises at least one longitudinal heating element.

15. Blade (210) according to one of the preceding claims, **characterized in that** it comprises at least one internal flow duct (260) for fluid such as a screen wash fluid.

16. Blade (210) according to Claim 15, wherein said at least one duct (260) is formed in the holding member (230) .

17. System for wiping a vehicle window, in particular a motor vehicle window, having at least one blade (110) according to one of the preceding claims.

18. Method for assembling a windscreen wiper blade (110) for a system for wiping a vehicle window, in particular a motor vehicle window, this blade comprising:
- a blade rubber (116),
- an elastic elongate support element in the form of a strip (118),
- a longitudinal member (130) for holding said blade rubber (116), which comprises a housing (132), referred to as first housing, for receiving a heel (134) of said blade rubber (116), and
- a longitudinal body (114) that comprises an aerodynamic deflector (120) and means for fastening to the holding member (130),
**characterized in that** it comprises the steps of:
a) inserting the heel (134) of the blade rubber (116) in said first housing (132) of the holding member (130),
b) inserting said support element (118) into an internal cavity (146) of a part (143) of the longitudinal body (114) in order to form an independent module (118, 114) of the holding member, and
c) inserting said part (143) of the longitudinal body (114) into a second housing (142) of the holding member (130).
